Europäisches Patentamt

European Patent Office

Office européen des brevets

(11) Publication number: **0 221 475 B1**

# EUROPEAN PATENT SPECIFICATION

(45) Date of publication of patent specification: **15.01.92**  (51) Int. Cl.⁵: **H04N 5/21**, H04B 1/12

(21) Application number: **86114797.3**

(22) Date of filing: **24.10.86**

(54) **An apparatus for cancelling television fading interference.**

(30) Priority: **26.10.85 JP 239807/85**

(43) Date of publication of application:
**13.05.87 Bulletin 87/20**

(45) Publication of the grant of the patent:
**15.01.92 Bulletin 92/03**

(84) Designated Contracting States:
**DE GB**

(56) References cited:
**DE-A- 3 446 267**

(73) Proprietor: **KABUSHIKI KAISHA TOSHIBA
72, Horikawa-cho Saiwai-ku
Kawasaki-shi Kanagawa-ken 210(JP)**

(72) Inventor: **Isobe, Seiji Patent Division
K.K. Toshiba 1-1 Shibaura 1-chome
Minato-ku Tokyo 105(JP)**
Inventor: **Kaijima, Makoto Patent Division
K.K. Toshiba 1-1 Shibaura 1-chome
Minato-ku Tokyo 105(JP)**

(74) Representative: **Henkel, Feiler, Hänzel & Partner
Möhlstrasse 37
W-8000 München 80(DE)**

## Description

The present invention generally relates to a television interference-cancelling apparatus for use in a television relay broadcasting station and, more particularly, to a television fading noise cancelling apparatus provided at a receiver end of a broadcast transmitter employing two separate sets of receiving antennas.

In general, in addition to television signals transmitted from a desired major television broadcasting station, unnecessary TV (television) interferences are mixed in the reception TV signal band of the television relay broadcasting station. These interferences may cause picture disturbance as beat interference and beat notes, resulting in deterioration of the TV broadcasting. Therefore, they need to be removed from the received TV signals.

Various kinds of methods have been proposed as a method of removing such interferences.

Practically, a number of interferences are incoming to a receiving antenna from various directions (incident angles). In particular, the interferences caused by reflection in the sporadic E-layer of the ionized layer or ionosphere are, in general, propagated over a long distance, so that they are called a "fading interference" in that their signal levels vary at a time period on the order of 0.5 to 10 Hz. In fact, a number of such fading interferences exist and are received by the receiving antenna through different signal propagation paths, respectively. Thus, in many cases, the fading periods of the respective interference signals differ from each other.

Prior art document DE-A-34 46 267 discloses an apparatus for cancelling television fading interference. This apparatus comprises a first antenna for receiving a desired television signal to derive a first television output signal and a second antenna positioned apart from the first antenna means by a wavelength of said desired television signal and directed to the same direction as the first antenna for receiving said desired television signal to derive a second television output signal. A first adder adds the first television output signal to the second television output signal to derive a summation signal and a subtractor subtracts the first television output signal from the second television output signal to derive a subtraction signal containing a plurality of fading interference signals. A phase shifting unit and a damping unit are provided for controlling an amplitude and a phase of said subtraction signal supplied from said subtractor, to derive a gain/phase-controlled subtraction signal at the output of the damping unit. Further, a second adder adds the gain/phase-controlled subtraction signal to the summation signal so as to derive the desired TV television signal without having adverse influences by said fading interference signals.

It is an object of the present invention to provide a television interference-cancelling apparatus which can effectively remove a plurality of interferences, whose signal levels change at different fading periods, from the received television signals; another object of the invention is to provide a television interference-cancelling apparatus in which only one interference having the maximum signal level is detected from a plurality of interferences, whose signal levels vary at different fading periods and the detected interference can be cancelled from the received television signals.

To solve these objects the present invention provides an apparatus for cancelling television fading interference as defined in claim 1.

For a better understanding of these and other objects of the present invention, reference is made to the following detailed description of the invention to be read in conjunction with the following drawings, in which:

Fig. 1 is a schematic block diagram of a basic circuit of a television interference-cancelling apparatus according to the invention;

Figs. 2, 3A, 3B, and 4 illustrate relationships between the incoming TV signal and the interference signals;

Fig. 5 shows a frequency spectrum of the TV signal and the fading interference signal u1 to u3;

Fig. 6 is a schematic block diagram of a television interference-cancelling apparatus according to a preferred embodiment of the invention;

Fig. 7 is an internal circuit diagram of the fading signal component remover shown in Fig. 6; and

Figs. 8 and 9 illustrate how the fading interference data are stored in the RAM and the relevant latch and buffer.

Before proceeding with various embodiments, a basic idea of the invention will now be summarized.

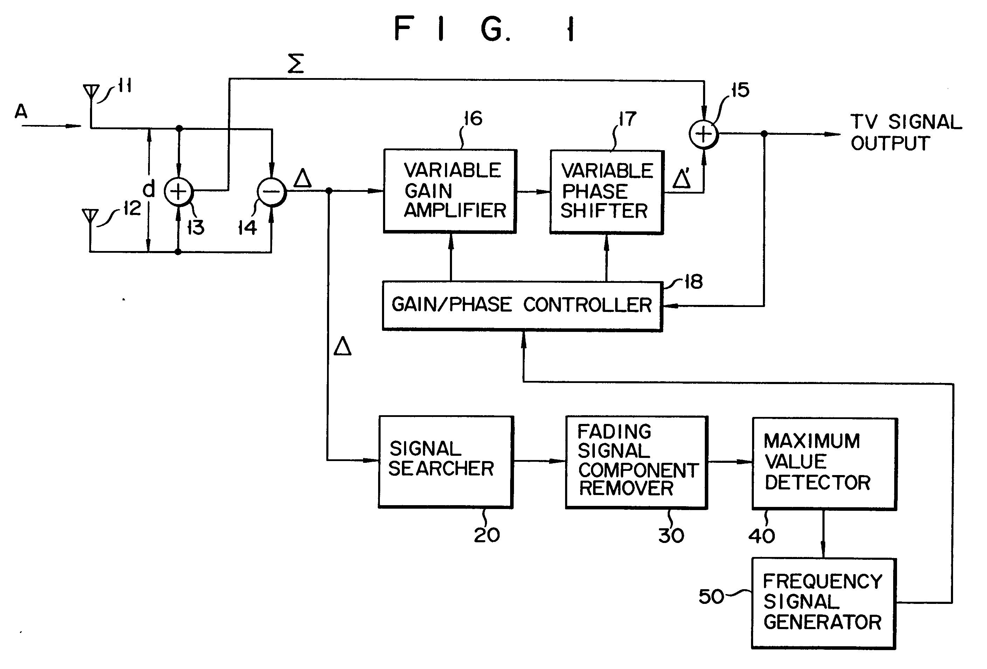

Referring now to Fig. 1, a first antenna 11 and a second antenna 12 are separated from each other by a distance of "d". This distance "d" corresponds to one wavelength ($\lambda$) of a desired television (TV) signal "A". First and second antennas 11 and 12 are aligned with a straight line perpendicular to the propagation direction of the desired TV signal "A". Accordingly, first and second antennas 11 and 12 can receive the desired TV signal "A" in phase and at the same signal strength. On the other hand, among a plurality of interferences, an interference signal "B" which is incoming at an angle $\theta$ with respect to the desired TV signal "A" is received with a following phase difference $\phi$ (see Fig. 2).

$$\phi = \frac{2\pi f}{c} d \cdot \sin\theta,$$

where, "c" is a velocity of light, "f" is an interference frequency, and "d" is an antenna distance

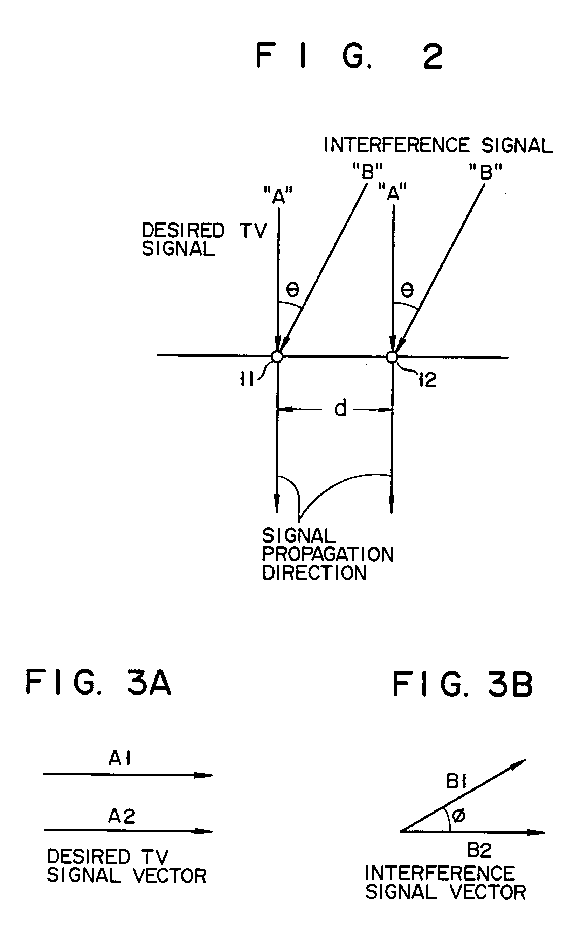

Accordingly, the desired TV signal "A" received by antennas 11 and 12 is expressed by vectors $A_1$ and $A_2$, respectively, as shown in Fig. 3A, whereas the interference signal "B" received by the same antennas 11 and 12 is expressed by vectors $B_1$ and $B_2$ as shown in Fig. 3B.

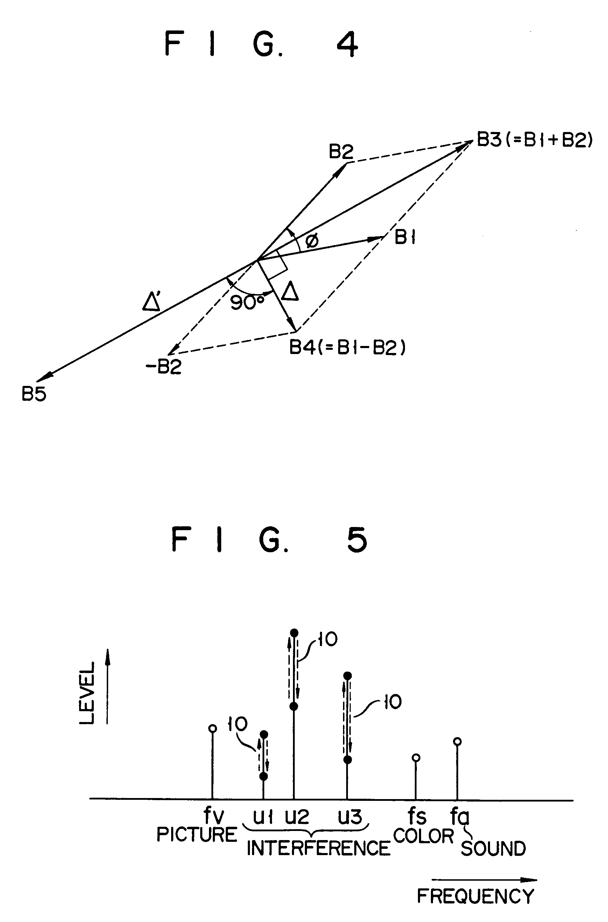

Specifically, the interference signal "B" will be described with reference to Fig. 4. The signal of vector $B_1$ is output from first antenna 11 and the signal of vector $B_2$ is output from second antenna 12. By adding these signals in a first adder circuit 13, the summation signal ($\epsilon$) of $B_1 + B_2 = B_3$ is obtained. On the contrary, by subtracting vector $B_2$ from vector $B_1$ in a subtracter circuit 14, the difference signal ($\Delta$) of $B_1 - B_2 = B_4$ is derived. Since the desired TV signals $A_1$ and $A_2$ are received in phase and thus, the in-phase components thereof are cancelled with each other, the resultant difference signal ($\Delta$) consists of only the interference signal components. In this case, the levels or amplitudes of the interference signals output from first and second antennas 11 and 12 are substantially equal to each other, since distance "d" between both antennas 11 and 12 is selected to be on the order of the wavelength of the desired TV signal A. Therefore, sum vector $B_3$ and difference (subtraction) vector $B_4$ always intersect perpendicularly.

The above description has been made of one kind of interference that is incoming from a predetermined propergation direction.

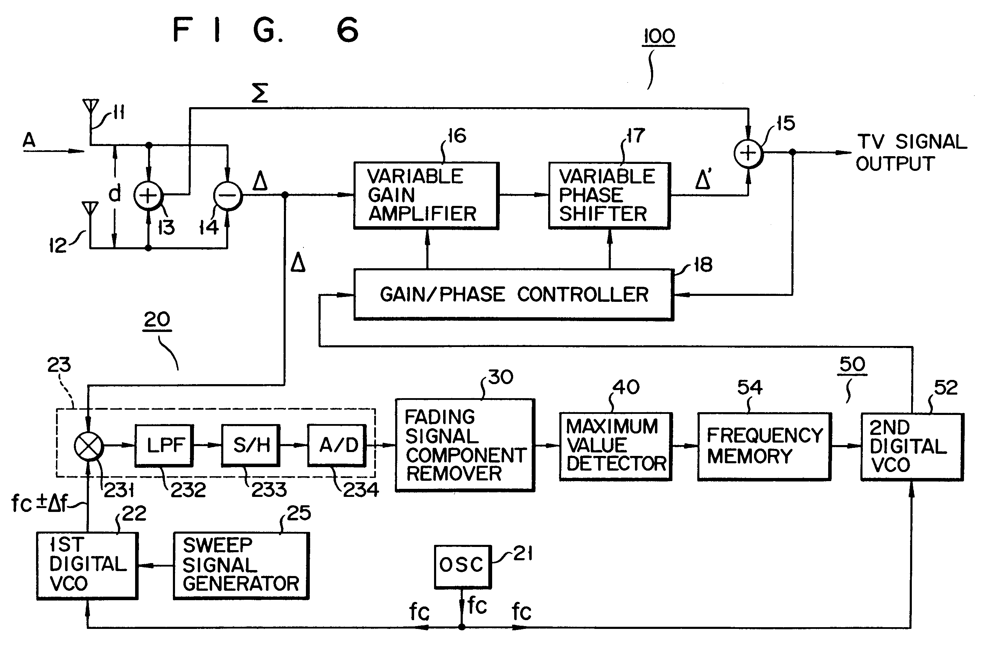

However, actually, a number of interferences are incoming to antennas 11 and 12 from various directions. In particular, the interference that is incoming by being reflected by the sporadic E-layer is, in general, received with a long distance propagation, so that it is incoming as a "fading wave, or fading interference" which varies at the period of 0.5 to 10 Hz. Further, a number of such interferences exist and are incoming by way of different propagation routes, respectively. Therefore, in many cases, these interferences have different fading periods. Fig. 5 shows an example of such interferences. That is, Fig. 5 illustrates a frequency spectrum distribution of difference (subtraction) signal ($\Delta$), in which "$f_v$" denotes a residual picture carrier, "$f_s$" is a residual color subcarrier, "$f_a$" is a residual sound carrier, and "u1" to "u3" represent interference signal components, respectively. The levels of interference signal components "u1" to "u3" vary at the different fading periods as indicated by broken lines 10, respectively.

On the other hand, returning to the diagram of Fig. 1, this interference can be removed or cancelled by the following manner in the ideal case where it consists of only the interference signal "B" as mentioned above.

That is, difference signal ($\Delta$) or the vector $B_4$ is amplified to a predetermined amplitude in a variable gain amplifier 16 and the phase of the amplified signal is further shifted by 90°C in a variable phase shifter 17, thereby producing a signal ($\Delta'$) of a vector $B_5$ ($= -B_3$) as a vector opposite to interference vector $B_3$ of sumation signal ($\epsilon$). Therefore, by adding signal ($\Delta'$) of vector $B_5$ to summation signal ($\epsilon$) in a second adder circuit 15, the signal consisting of only the desired TV signal from which the unnecessary interference signal components have been removed can be finally obtained.

However, if a number of interferences having different fading periods are present due to the reflecting function by the sporadic E-layer of the ionized layer, it is necessary to detect the interference having the true maximum level in accordance with, for example, the fading periods of interference signal components $u_1$ to $u_3$ as shown in Fig. 5. Describing in more detail with reference to interferences u2 and u3 in Fig. 5, the signal level of interference u3 may be larger than that of u2 at a given moment. Therefore, if the foregoing interference-cancelling process would be executed on the basis of only interference u3 being detected at that moment, a beat interference due to interference u2 having the inherent (true) maximum signal level could be caused, so that the quality of the received TV signal will deteriorate.

The present invention has a feature such that such a problem can also be solved.

A television interference-cancelling apparatus according to the invention is featured by the following circuit arrangement.

The summation signal ($\epsilon$) and difference (subtraction) signal ($\Delta$) are obtained from the reception signals of two antennas 11 and 12 arranged at a predetermined distance "d" in first adder circuit 13 and subtracter circuit 14, respectively. Next, a plurality of frequency signals (i.e., interference signals) included in the difference signal are searched by a signal searcher 20 within the television reception band. The signal levels of the respective searched frequency signals obtained by signal searcher 20 are converted to digital data. The searched digital data is digitally processed in the fading signal component remover 30. For instance, the digital data at every frequency is digitally added by a fading signal component remover 30 and the added data is divided by the total number of digital data, thereby removing the fading components from the searched data. Further, the maximum value among the digital data obtained by fading signal component remover 30 is detected by a maximum value detector 40. Then, a frequency signal corresponding to the interference data obtained by maximum value detector 40 is generated from a frequency signal generator 50. The gain and phase of the subtraction signal are controlled by use of the frequency signal produced by frequency signal generator 50.

The above-described difference signal obtained from subtracter circuit 14 is supplied to variable gain amplifier 16 to be amplified with a predetermined gain. Further, the output of amplifier 16 is input to the variable phase shifter 17 where its phase is shifted by a predetermined phase amount. The resultant processed difference signal $\Delta'$ and the summation signal $\epsilon$ from first adder circuit 13 are added by second adder circuit 15. The output of this second adder circuit 15 is fed back to a gain/phase controller 18 and the frequency signal of the interference having the maximum level derived from frequency signal generator 50 is also supplied to controller 18. This, gain/phase controller 18 controls the gain of variable gain amplifier 16 and the phase-shift amount of variable phase shifter 17 on the basis of those two input signals, thereby eliminating the adverse influence on the desired TV signal by the fading interference signal component.

It should be noted that the amplitude, i.e., gain information, is included in the added signal from second adder circuit 15 and the frequency, i.e., phase information is included in the frequency signal from frequency signal generator 50. Gain/phase controller 18 executes the foregoing controls on the basis of the gain and phase information.

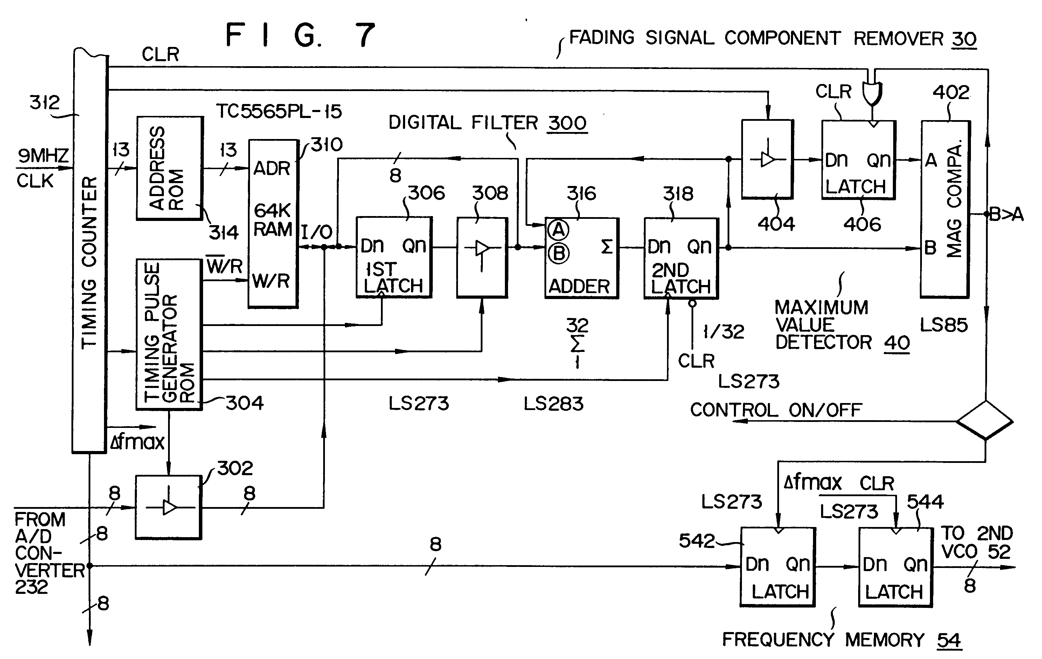

Referring now to Fig. 6, a description will be made of a television interference-cancelling apparatus 100 according to a preferred embodiment.

It should be noted that the same reference numerals shown in Fig. 1 will be employed as those for denoting the same circuit elements shown in Fig. 6.

First, signal searcher 20 to search the difference or subtraction signal ($\Delta$) from subtracter circuit 14 includes an oscillator (OSC) 21 which oscillates at a center frequency $f_c$ with-in the TV reception frequency band. The output of oscillator 21 is supplied to both first and second digital voltage-controlled oscillators (VCO) 22 and 52, respectively. Second digital VCO 52 is included in frequency signal generator 50. First digital VCO 22 accurately increases or decrease the above center frequency $f_c$ of the oscillator signal in accordance with the frequency data from a sweep signal generator 25 and outputs analog signal having a frequency range of ($f_c \pm \Delta f$). The output of digital VCO 22 together with the subtraction signal ($\Delta$) of subtracter circuit 14 is supplied to a frequency converter 23. The signal searcher 20 is constructed of the oscillator 21, first digital VCO 22, frequency converter 23 and sweep signal generator 25.

Frequency converter 23 includes: a mixer 231; a low-pass filter (LPF) 232; a sample/hold circuit (S/H) 233; and an analog-to-digital converter (A/D) 234. After the output $\Delta$ of subtracter 14, namely, the difference signal consisting of only the interference signal components has been mixed to the output of digital VCO 22 by mixer 231 and frequency-converted, the unnecessary harmonic components contained in the converted signals are removed by LPF 232. The resultant filtered signals are converted to the digital interference data by S/H circuit 233 and A/D converter 234. The resultant digital data is sequentially transmitted to fading signal components remover 30.

Fading signal component remover 30 is constituted by what is so-called "a digital filter" comprising a memory to temporarily store a predetermined number of digital input data, a digital adder to sequentially add the respective data stored in this memory, a divider to divide the output of this adder by the number of those data, and the like, as will be explained hereinafter. By updating the data stored in the memory to the latest data in accordance with the oldest data and by adding all of the stored data at that time and then dividing the added data by the number of stored data, the interference signal amplitude data from which the fading signal components have been removed is detected. In other words, the averaged values of the stored data are digitally derived from the fading signal component remover 30. The fading-less interference signal amplitude data are sequentially supplied to maximum value detector 40.

Maximum value detector 40 detects the maximum value from among all of the input fading-less interference data and allows the single frequency data having the maximum value to be stored into a frequency memory 54. The fading-less interference data stored in frequency memory 54 is transferred to second digital VCO 52. Second digital VCO 52 frequency-converts signal $f_c$ from oscillator 21 in accordance with the fading-less data stored in frequency memory 54, thereby outputting the frequency signal corresponding to the interference of the maximum signal level. This fading-less interference frequency signal is supplied to gain/phase controller 18 instead of difference signal ($\Delta$) from subtracter circuit 14.

Namely, television interference-cancelling apparatus 100 first detects the fading-less interference having the maximum signal level from the interferences included in difference signal ($\Delta$) of subtracter circuit 14 and secondly cancels it. To this end, the frequency signal of the interference of the maximum value is accurately detected.

Referring back to Figs. 4 and 6, overall operation will now be described.

The desired TV signal "A" that is incoming to two sets of antennas 11 and 12 is, in general, the TV signal in the VHF band. Therefore, the fading phenomenon is most likely to occur due to an adverse influence by the sporadic E-layer of the ionized layer.

The desired TV signal "A" and interference signal "B" are simultaneously and/or randomly incoming to antennas 11 and 12. The TV output signals of both antennas are added by first adder circuit 13, so that summation signal $(\epsilon)$ is output therefrom. Difference or subtraction signal $(\Delta)$ between these TV output signals is taken out of subtracter circuit 14. The desired TV signal components of two TV output signals are cancelled with each other and are not contained in difference signal $(\Delta)$, since antennas 11 and 12 are arranged at a predetermined distance "D". Thus, only a plurality of interference signal components are included in difference signal $(\Delta)$. The fading components of all of the interference signals are first removed in order to detect one interference signal having the maximum signal level within a predetermined period (namely, the signal generation period corresponding to the whole capacity of the memory) from the interference signal components. Next, one interference signal having the maximum signal level is taken out for a predetermined period from a plurality of interference signals from which the fading components have been removed.

The above fading remover operation will now be described in detail. First, the frequency data of sweep signal generator 25 is changed at a predetermined time interval in, for example, 256 steps of 0 to 255. Thus, the output of first digital VCO 22 is sequentially swept from the lowest frequency to the highest frequency within the TV reception signal band. The output of second digital VCO 22 together with difference signal $(\Delta)$ derived from subtracter circuit 14 is supplied to mixer 231 of frequency converter 23, thereby allowing the frequency spectrum of the fading interferences to be searched.

In mixer 231, when difference signal $\Delta$ is synchronized with the frequency signal from first digital VCO 22, the synchronized signal is converted to, for example, thirty-two digital data by S/H circuit 233 and A/D converter 234 through LPF 232 and sequentially transferred to fading signal component remover 30.

In remover 30, the frequency search is executed in 256 steps as mentioned above. Assuming that each of the synchronized signals is divided into 32 digital data, the data which is sequentially input is stored into the memory having the memory capacity of 64 kbytes into the addresses as many as total 8192 (= 256 x 32) consisting of 0 to 255 addresses for every frequency and 0 to 331 addresses in accordance with the sequence from the old data at each frequency. Among the 0 to 31 data at each frequency, the single oldest data is pulled out for every searching operation and the single latest data is stored. Namely, the data is updated. Thus, thirty-two (32) sets of data are stored from the latest data to the old data. In every step, each time one data is updated, the addition of thirty-two data is performed by the digital adder circuit. The added data is divided by 32 by the divider. Namely, the average value is digitally obtained, so that the interference amplitude data from which the fading signal components were removed is derived. The above operations will be described in detail hereinafter.

The resultant fading-less interference amplitude data is transferred to maximum value detector 40. This detector 40 detects only one frequency data having the maximum value within the range of the frequency sweep steps 0 to 255 and sends it to frequency memory 54 and allows this data to be stored therein. Thereafter, the data stored in memory 54 is transmitted to second digital VCO 52. The oscillation frequency $f_c$ of oscillator 21 is converted under control of this data, thereby allowing the signal having the frequency corresponding to the frequency of this data to be oscillated. Thus, the frequency signal which coincides with the fading-less interference data having the maximum signal level can be obtained. It is understood that the fading signal components are not contained in this frequency signal.

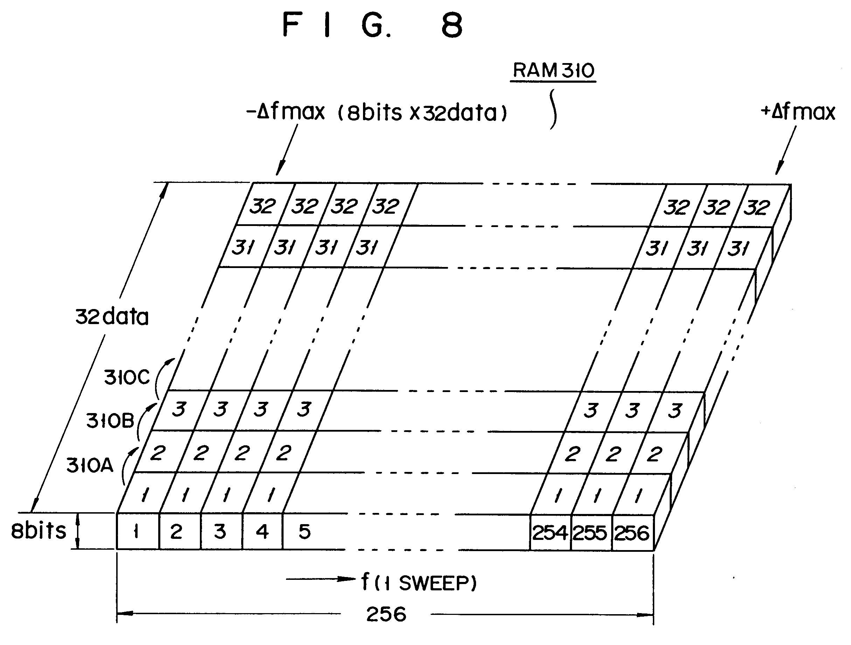

Detailed operation of fading signal component remover 30 according to the invention will now be described with reference to Figs. 7 to 9.

As described above, fading signal component remover 30 is the circuit that performs the significant function in television interference-cancelling apparatus 100 of the invention. The main function is that a plurality of fading interferences included in the difference or subtraction signal are searched within the received TV signal band so as to detect the digital data of each of the fading interferences. A predetermined number of those interference data are added in each sweeping frequency step, respectively. The added value is averaged in a predetermined calculation manner, thereby obtaining the digital average value. Thus, the fading component of the digital average value. Thus, the fading component of the fading interference of each frequency can be removed.

Fig. 7 is an internal circuit of fading signal component remover 30 shown in Fig. 6.

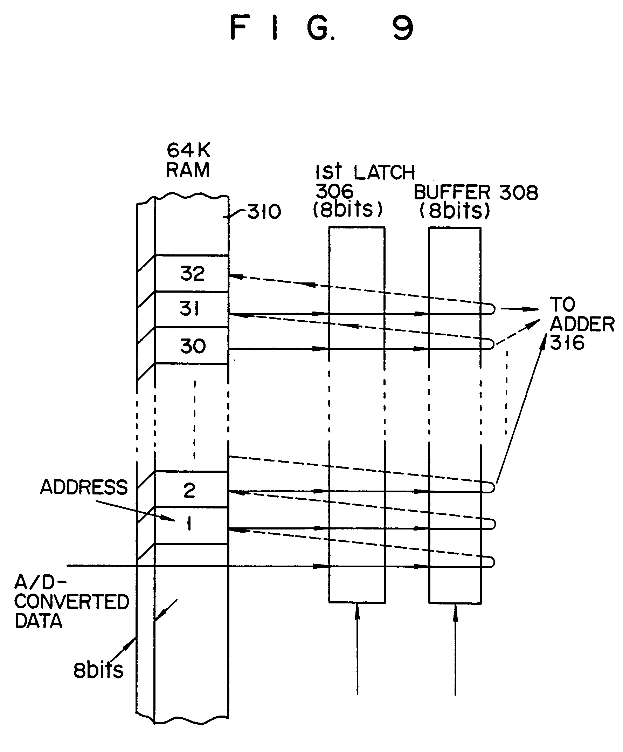

First, thirty-two sets of 8-bit input (fading interference) data are sequentially input to a buffer 302 at every fading interference frequency (in 256 steps) from A/D converter 234 of frequency converter 23 shown in Fig. 6. The 8-bit data which has temporarily been stored in buffer 302 is read out by a timing pulse from a timing pulse generator 304 and stored into an RAM 310 of 64 kbytes through a first latch 306 and a first buffer 308. Fig. 8 pictorially shows the state of storage of those fading interference data in RAM 310.

When the fading interference data is stored into RAM 310, the data is stored into a predetermined memory region on the basis of the address data generated from an address ROM 314 whose operation is controlled by a timing counter 312. Timing counter 312 is designed to be operable by the clock of 9 MHz. The fading interference data is written into RAM 310 in response to a timing pulse which is generated from timing pulse generator 304. On the other hand, the fading interference data is also read out of RAM 310 in response to the timing pulse from generator 304.

The storing operation of the fading interference data into RAM 310 will be further described in detail hereinbelow.

As mentioned above, for the center carrier frequency $f_c$ of the received desired TV signal, the frequency changes to 256 sorts of frequencies within the range of $-\Delta f$ to $+\Delta f$ in correspondence to the sweep range of sweep signal generator 25 in this embodiment. The respective frequency data, for example, the 32 sets of fading interference data (8-bit data) at $-\Delta f_{max}$ in the case of the memory region at the left end in Fig. 8 are sequentially stored. In this case, the past fading interference data which has already been stored in this most-left memory region is sequentially shifted upwardly in Fig, 8 as indicated by arrows 310A, 310B, and 310C. The data is once read out of RAM 310 and shifted through first latch 306 and first buffer 308. At the same time, the read data is input to an input terminal B of an adder 316 and added.

The previously added data is latched into a second latch 318 and thereafter, it is input to terminal Ⓑ of adder 316. Thus, the data is added and again latched into second latch 318.

In this manner, the added values of thirty-two fading interference data from the latest data to the old data are derived by adder 316 and latched therein.

As described above, the thirty-two added values obtained by adder 316 are supplied to second latch 318. From this latch 318 , a predetermined data value of the respective added values is successively taken out, so that the average value data can be finally derived. Accordingly, the 32 added values correspond to $2^5$, so that the five digit data is dropped from the LSB (least Significant Bit) data of the added data. Then the remaining bit data is the desired digitally-averaged data.

Since the fading signal component has already been removed from each of the average value data, the maximum value is obtained from the average value data for the whole intervals of 256 steps in maximum value detector 40 at the next stage. Namely, the average value data obtained from an output terminal $Q_n$ of second latch 318 is directly supplied to a Ⓑ terminal of a comparator 402 and also supplied to an Ⓐ terminal of comparator 402 through a buffer 404 and a latch 406.

On the basis of those two input data, comparator 402 compares both input data and selects one data having the maximum value from among the whole averaged data (256 8-bit data) which have been collected within one sweep period, namely, a period of 256 steps.

Thus, the one selected fading-less interference data having the maximum value is supplied to one latch 542 of frequency memory 54 and latched therein and also supplied to the other latch 544 and latched therein. The output data from latch 544 is supplied to second digital VCO 52 in Fig. 6. Thus, a desired frequency signal is oscillated by second VCO 52 and supplied to gain/phase controller 18, so that the fading interference can be cancelled from the incoming television signal for every sweep period.

Since the fading-less interference data having the maximum value can be detected for every one sweep period, the fading interference is cancelled from the incoming TV signal in each sweep period. In other words, the amplitudes of the interference signals momently vary due to the fading phenomenon which always changes over time. Therefore, the present invention is characterized in that for the interference signals whose amplitudes momently change, the fading interference signal having the maximum value is newly searched for every short period, e.g., one sweep period, and the fading interference can be removed from the received TV signal on the basis of the searched fading interference signal.

Once the fading interference is cancelled from the received TV signal, other interferences such as gain and phase variations may be further removed from the fading-less TV signal in the circuits 16, 17 and 18.

Fig. 9 pictorially shows a flow of the A/D converted fading interference data among RAM 310, first latch 306, and first buffer 308.

The component elements of fading signal component remover 30 in Fig. 7, as previously described, are commercially available and their type numbers are written in Fig. 7.

The whole rewriting time of data in the memories of 64k-RAM 310 is 38.4 msec x 32 = 1.23 seconds and the scanning speed on the frequency base is 150 $\mu$sec x 256 = 38.4 milliseconds.

As described in detail above, according to the present invention, it is possible to provide a television interference-cancelling apparatus in which the frequency of the fading interference signal having the maximum signal level within a predetermined period, e.g., one sweep period, can be detected among a plurality of fading interferences which are incoming into two sets of antennas, so that even if a number of fading interferences are incoming, one fading interference signal having the maximum signal level can be effectively detected and the received TV signal is corrected based upon this fading interference signal and thus the fading-less TV reception signal can be achieved.

In addition, the removal of the fading interference mentioned above can be realized by merely two sets of separate antennas, so that there is another advantage such a low-cost interference-cancelling apparatus can be provided.

While the invention has been described in terms of certain preferred embodiments, and exemplified with respect thereto, those skilled in the art will readily appreciate that various modifications, changes, omissions, and substitutions may be made without departing from the spirit of the invention.

For example, although 64k-RAM 310 has been used, RAM 310 is not limited to this type but other memories having various memory capacities can be also used. In addition, although one sweep period has been divided into 256 steps, it can be apparently divided into a different number of steps.

In brief, a plurality of fading interference signals are converted into signals of low frequencies and further converted into digital signals. The average (i.e., fading-less) values regarding the digital fading signals for a predetermined period (in this example, thirty-two data collecting periods) are obtained. Next, the single digital fading-less interference signal having the level of the maximum value is obtained from among the digital fading signals having the average values in a predetermined period (one sweep period in this embodiment). As a result, the gain and phase of the desired TV signal can be corrected without having adverse influence by the fading interference signal, because the most effective fading interference signal component can be precisely removed from the desired TV signal. In the inventive circuit arrangement which can execute such fundamental signal processes, various well-known circuit elements can be used.

## Claims

1. An apparatus (100) for cancelling television fading interference comprising:
   - first antenna means (11) for receiving a desired television (TV) signal to derive a first television (TV) output signal;
   - second antenna means (12) positioned apart from the first antenna means (11) by a wavelength of said desired television signal (d) and directed to the same direction as the first antenna means (11), for receiving said desired TV signal to derive a second television (TV) output signal;
   - first adder means (13) for adding the first TV output signal to the second TV output signal to derive a summation signal ($\Sigma$) containing a plurality of summed fading interference signals (B3);
   - subtraction means (14) for subtracting the first TV output signal from the second TV output signal to derive a subtraction signal ($\Delta$) containing a plurality of fading interference signals (B4);
   - gain and phase controlling means (16; 17; 18) for controlling an amplitude and a phase of said subtraction signal ($\Delta$) supplied from said subtraction means (14), to derive a gain and phase-controlled subtraction ($\Delta'$); and
   - second adder means (15) for adding said gain and phase-controlled subtraction signal ($\Delta'$) to said summation signal ($\Sigma$) so as to derive said desired TV signal without having adverse influences by said fading interference signals (B4);
   characterized by
   - signal searching means (20) for frequency-analyzing said subtraction signal ($\Delta$) to detect said plurality of fading interference signals and to present these signals in a digital form;
   - fading signal component removing means (30) for removing fading signal components from said plurality of fading interference digital signals by digitally averaging said plurality of fading interference digital signals to derive a plurality of fading-less interference digital signals;
   - maximum value detector means (40) for detecting a maximum value from said plurality of fading-less interference digital signals to derive single digital data having said maximum value; and
   - frequency signal generating means (50) for generating an analog frequency signal corresponding to said single digital interference data having the maximum value; wherein:
   - said gain and phase controlling means (16; 17; 18) controls the amplitude and the phase of said subtraction signal ($\Delta$) supplied from said subtraction means (14), based upon said single digital interference data having the maximum value to derive the gain and phase-controlled subtraction signal (Δ') having a phase which is opposite to the phase of the summed fading interference signal corresponding to said maximum value.

2. An apparatus (100) as claimed in claim 1, characterized in that said signal searching means (20) includes:

an oscillator (21) for oscillating an oscillation signal having a center frequency (fc) with respect to said desired TV signal;

a sweep signal generator (25) for generating a sweeping signal having a predetermined frequency range (± Δf);

a first voltage controlled oscillator (22) for producing mixing signals (fc ± Δf) by sweeping said oscillation signal having said center frequency (fc) within said predetermined frequency range (± Δf), based upon said sweeping signal; and

a frequency converter (23) for frequency-converting said subtraction signal (Δ) by mixing said mixing signals (fc ± Δf) therewith, said frequency converter (23) comprising an A/D converter (234) to obtain said digital fading interference signals.

3. An apparatus (100) as claimed in claim 2, characterized in that said frequency converter (23) is constructed of a mixer (231), a low pass filter (232), a sample/hold circuit (233) and said analog-to-digital converter (234), said circuits being series-connected to each-other.

4. An apparatus (100) as claimed in claim 1, characterized in that said fading signal component remover (30) comprises a digital filter (300).

5. An apparatus (100) as claimed in claim 4, characterized in that said digital filter (300) includes:

a memory (310) for storing said digital fading interference signals derived from said signal searching means (20); and

a digitally averaging circuit (316; 318) for successively adding said digital fading interference signals read out respectively from said memory (310) within a predetermined data number address to derive summed fading interference signal component data, and for dividing said summed fading interference signal comoonent data by said predetermined data number address so as to derive digitally-averaged fading interference signals, thereby producing said fading-less interference digital signals.

6. An apparatus (100) as claimed in claim 5, characterized in that said digitally averaging circuit includes:

a digital adder (316) for successively adding said digital fading interference signals read out respectively from said memory (310) within said predetermined data number address to derive said summed fading interference signal component data; and

a first latch (318) for latching said summed fading interference signal component data so as to take out a predetermined digit from said summed fading interference signal component data as said digitally-averaged fading interference signals.

7. An apparatus (100) as claimed in claim 1, characterized in that said maximum value detector means (40) includes:

a buffer (404) for temporarily storing said digitally-averaged fading interference signals derived from said fading signal component remover means (30);

a second latch (406) for latching said fading interference signals buffered in the buffer (404); and

a comparator (402) having a first input (A) to receive said fading interference signals from said second latch (406) and a second input (B) to receive said fading interference signals directly from said fading signal component remover means (30), for comparing said fading interference signals of the first input (A) with said fading interference signals of the second input (B) so as to derive said single digital data having said maximum value.

8. An apparatus (100) as claimed in claim 2, characterized in that said frequency signal generating means (50) includes:

a frequency memory (54) for storing said single digital interference data having the maximum value sent from said maximum value detector means (40); and

a second voltage-controlled oscillator (52) for producing said analog frequency signal by correspondingly processing said single digital interference data stored in the frequency memory (54) and said oscillation signal having said center frequency (fc) derived from said oscillator (21).

9. An apparatus (100) as claimed in claim 1, characterized in that said gain and phase controlling means is constructed of a variable gain amplifier (16), a variable phase shifter (17) series-connected to the variable gain amplifier (16), and a gain and phase controller (18) coupled to said variable gain amplifier (16) and said variable phase shifter (17).

**Revendications**

1. Un dispositif (100) de suppression d'interférence fading de télévision comportant :

- des premiers moyens d'antenne (11) pour recevoir un signal désiré de télévision (TV) pour dériver un premier signal de sortie de télévision(TV) ;
- des seconds moyens d'antenne (12) situés à distance des premiers moyens d'antenne (11) à une longueur d'onde (d) dudit signal désiré de télévision et dirigés dans la même direction que les premiers moyens d'antenne (11), pour recevoir ledit signal TV désiré pour dériver un second signal de sortie de télévision TV ;
- des premiers moyens additionneurs (13) pour ajouter le premier signal de sortie TV au second signal de sortie TV pour dériver un signal de sommation ( $\Sigma$ ) contenant une pluralité de signaux sommés(B3) d'interférence fading ;
- des moyens soustracteurs (14) pour soustraire le premier signal de sortie TV du second signal de sortie TV pour dériver un signal de soustraction ( $\Delta$ ) contenant une pluralité de signaux (B4) d'interférence fading ;
- des moyens (16;17; 18) de commande de gain et de phase pour commander l'amplitude et la phase dudit signal de soustraction ( $\Delta$ ) délivré par lesdits moyens soustracteurs (14), pour dériver un signal de soustraction ( $\Delta$ ') commandé par gain et phase ; et
- des seconds moyens additionneurs (15) pour additionner ledit signal de soustraction ( $\Delta$ ') commandé par gain et phase audit signal de sommation ( $\Sigma$ ) de manière à dériver ledit signal TV sans avoir des influences néfastes par lesdits signaux (B4) d'interférence fading ; caractérisé par
- des moyens (20) de recherche de signal pour analyser par fréquence ledit signal de soustraction ( $\Delta$ ) pour détecter ladite pluralité de signaux d'interférence fading et pour présenter ces signaux sous une forme numérique ;
- des moyens (30) de suppression des composantes de signal fading pour supprimer les composantes de signal fading de ladite pluralité de signaux numériques d'interférence fading en faisant une moyenne numérique de ladite pluralité de signaux numériques d'interférence fading pour dériver une pluralité de signaux numériques d'interférence sans fading ;
- des moyens (40) détecteurs de valeur maximale pour détecter une valeur maximale dans ladite pluralité de signaux numériques d'interférence sans fading pour dériver des données numériques uniques présentant ladite valeur maximale ; et
- des moyens (50) de création d'un signal de fréquence pour engendrer un signal analogique de fréquence correspondant auxdites données numériques uniques d'interférence présentant la valeur maximale ; dans lequel :
- lesdits moyens (16;17;18) de commande de phase et de gain commandent l'amplitude et la phase dudit signal de soustraction ( $\Delta$ ) délivré par lesdits moyens de soustraction (14), sur la base desdites données numériques uniques d'interférence présentant la valeur maximale pour dériver le signal de soustraction ( $\Delta$ ') commandé par gain et phase présentant une phase qui est opposée à la phase du signal sommé d'interférence fading correspondant à ladite valeur maximale.

2. Un dispositif (100) tel que revendiqué dans la revendication 1, caractérisé en ce que lesdits moyens (20) de recherche de signal comportent :

un oscillateur (21) pour faire osciller un signal d'oscillation présentant une fréquence centrale (fc) par rapport audit signal TV désiré ;

un générateur (25) de signal de balayage pour engendrer un signal de balayage présentant une gamme prédéterminée de fréquence ( $\pm \Delta$ f) ;

un premier oscillateur (22) commandé par tension pour produire des signaux de mélange (fc $\pm \Delta$ f) par balayage dudit signal d'oscillation présentant ladite fréquence centrale (fc) dans ladite plage prédéterminée de fréquence ( $\pm \Delta$ f), sur la base dudit signal de balayage ; et

un convertisseur de fréquence (23) pour convertir en fréquence ledit signal de soustraction ( Δ ) par mélange desdits signaux de mélange (fc ± Δ f) avec celui-ci, ledit convertisseur de fréquence (23) comportant un convertisseur analogique/numérique (234) pour obtenir lesdits signaux numériques d'interférence fading.

3. Un dispositif (100) tel que revendiqué dans la revendication 2, caractérisé en ce que ledit convertisseur de fréquence (23) est constitué par un mélangeur (231), un filtre passe-bas (232), un circuit (233) d'échantillonnage/maintien et ledit convertisseur analogique/numérique (234), lesdits circuits étant reliés l'un à l'autre en série.

4. Un dispositif tel que revendiqué dans la revendication 1, caractérisé en ce que lesdits moyens (30) pour supprimer les composantes de signal fading comportent un filtre numérique (300).

5. Un dispositif (100) tel que revendiqué dans la revendication 4, caractérisé en ce que ledit filtre numérique (300) comporte :

une mémoire (310) pour mémoriser lesdits signaux numériques d'interférence fading dérivés desdits moyens (20) de recherche de signal ; et

un circuit (316 ; 318) de réalisation de moyenne par voie numérique pour additionner successivement lesdits signaux numériques d'interférence fading lus respectivement dans ladite mémoire (310) à une adresse prédéterminée de nombre de données pour dériver les données des composantes des signaux sommés d'interférence fading, et pour diviser lesdites données de signaux sommés d'interférence fading par ladite adresse prédéterminée de nombre de données de manière à dériver des signaux d'interférence fading à moyenne réalisée par voie numérique, de manière à produire lesdits signaux numériques d'interférence sans fading.

6. Un dispositif (100) tel que revendiqué dans la revendication 5, caractérisé en ce que ledit circuit de réalisation de moyenne par voie numérique comporte :

un additionneur numérique (316) pour additionner successivement lesdits signaux numériques d'interférence fading lus respectivement dans ladite mémoire (310) à ladite adresse prédéterminée de nombre de données pour dériver lesdites données des composantes des signaux sommés d'interférence fading; et

une première mémoire ( 318) pour mémoriser lesdites données de composantes de signaux sommés d'interférence fading de manière à délivrer un digit prédéterminé à partir desdites données de composantes de signaux sommés d'interférence fading en tant que lesdits signaux d'interférence fading à moyenne réalisée par voie numérique.

7. Un dispositif (100) tel que revendiqué dans la revendication 1, caractérisé en ce que lesdits moyens (40) de détection de valeur maximale comportent :

un tampon (404) pour mémoriser provisoirement lesdits signaux d'interférence fading à moyenne réalisée par voie numérique dérivés desdits moyens (30) pour supprimer les composantes de signal fading ;

une seconde mémoire (406) pour mémoriser lesdits signaux d'interférence fading mémorisés dans ledit tampon (404); et

un comparateur (402) présentant une première entrée (A) pour recevoir lesdits signaux d'interférence fading provenant de ladite seconde mémoire (406) et une seconde entrée (B) pour recevoir lesdits signaux d'interférence fading directement desdits moyens (30) de suppression de composantes de signal fading, pour comparer lesdits signaux d'interférence fading de la première entrée (A) avec lesdits signaux d'interférence fading de la seconde entrée (B) de façon à dériver lesdites données numériques uniques présentant ladite valeur maximale.

8. Un dispositif (100) tel que revendiqué dans la revendication 2, caractérisé en ce que lesdits moyens (50) de création de signal de fréquence comportent :

une mémoire de fréquence (54) pour mémoriser lesdites données numériques uniques d'interférence présentant la valeur maximale envoyée par lesdits moyens (40) de détection de valeur maximale ; et

un second oscillateur (52) commandé par tension pour produire ledit signal de fréquence analogique en traitant de manière correspondante lesdites données numériques uniques d'interférence mémorisées dans la mémoire de fréquence (54) et ledit signal d'oscillation présentant ladite fréquence centrale (fc) dérivé dudit oscillateur (21).

9. Un dispositif (100) tel que revendiqué dans la revendication 1, caractérisé en ce que lesdits moyens de commande de gain et de phase sont constitués par un amplificateur (16) à gain variable, un dispositif (17) à décalage variable de phase relié en série à l'amplificateur (16) à gain variable, et un dispositif (18) de commande de gain et de phase couplé audit amplificateur (16) à gain variable et audit dispositif (17) de décalage variable de phase.

**Patentansprüche**

1. Einrichtung (100) zur Unterdrückung des Fernsehinterferenzschwundes, mit:
   - einer ersten Antenneneinrichtung (11) zum Empfangen eines gewünschten Fernseh-(TV)Signales, um ein erstes Fernseh-(TV)Ausgangssignal abzuleiten;
   - einer zweiten Antenneneinrichtung (12), die um eine Wellenlänge des gewünschten Fernsehsignales (d) von der ersten Antenneneinrichtung (11) entfernt angeordnet und in die gleiche Richtung wie die erste Antenneneinrichtung (11) gerichtet ist, zum Empfangen des gewünschten Fernsehsignales, um ein zweites Fernseh-(TV)Ausgangssignal abzuleiten;
   - einer ersten Addiereinrichtung (13) zum Addieren des ersten TV-Ausgangssignales zum zweiten TV-Ausgangssignal, um ein Summationssignal ( $\Sigma$ ) abzuleiten, das eine Vielzahl summierter Interferenzschwundsignale (B3) enthält;
   - einer Subtraktionseinrichtung (14) zum Subtrahieren des ersten TV-Ausgangssignales vom zweiten TV-Ausgangssignal, um ein Subtraktionssignal ($\Delta$) abzuleiten, das eine Vielzahl von Interferenzschwundsignalen (B4) enthält;
   - einer Verstärkungs- und Phasensteuereinrichtung (16; 17; 18) zum Steuern einer Amplitude und einer Phase des von der Subtraktionseinrichtung (14) eingespeisten Subtraktionssignales ($\Delta$), um eine bezüglich Verstärkungsfaktor und Phase gesteuerte Subtraktion ($\Delta'$) abzuleiten; und
   - einer zweiten Addiereinrichtung (15) zum Addieren des bezüglich Verstärkungsfaktor und Phase gesteuerten Subtraktionssignales ($\Delta'$) zum Summationssignal ( $\Sigma$ ), um das gewünschte TV-Signal ohne nachteilhafte Einflüsse durch die Interferenzschwundsignale (B4) abzuleiten;

gekennzeichnet durch
   - eine Signalsucheinrichtung (20) zum Frequenzanalysieren des Subtraktionssignales ($\Delta$), um die Vielzahl von Interferenzschwundsignalen zu erfassen und diese Signale in Digitalform zu präsentieren;
   - eine Signalschwundkomponenten-Entfernungseinrichtung (30) zum Entfernen von Signalschwundkomponenten aus der Vielzahl von digitalen Interferenzschwundsignalen durch digitales Mitteln der Vielzahl von digitalen Interferenzschwundsignalen, um eine Vielzahl von schwundfreien digitalen Interferenzsignalen abzuleiten;
   - eine Höchstwertdetektoreinrichtung (40) zum Erfassen eines Höchstwertes aus der Vielzahl von schwundfreien digitalen Interferenzsignalen, um ein einziges digitales Datum mit dem Höchstwert abzuleiten; und
   - eine Frequenzsignalgeneratoreinrichtung (50) zum Erzeugen eines analogen Frequenzsignales entsprechend dem einzigen digitalen Interferenzdatum mit dem Höchstwert; wobei:
   - die Verstärkungs- und Phasensteuereinrichtung (16; 17; 18) die Amplitude und die Phase des Subtraktionssignales ($\Delta$), das von der Subtraktionseinrichtung (14) eingespeist ist, aufgrund des einzigen digitalen Interferenzdatums mit dem Höchstwert steuert, um das bezüglich Verstärkungsfaktor und Phase gesteuerte Subtraktionssignal ($\Delta'$) mit einer Phase abzuleiten, die entgegengesetzt zu der Phase des summierten Interferenzschwundsignales entsprechend dem Höchstwert ist.

2. Einrichtung (100) nach Anspruch 1, dadurch gekennzeichnet, daß die Signalsucheinrichtung (20) umfaßt:
   einen Oszillator (21), um ein Schwingungssignal mit einer Mittenfrequenz (fc) bezüglich des gewünschten TV-Signales in Schwingung zu versetzen;
   einen Kippsignalgenerator (25) zum Erzeugen eines Kippsignales mit einem vorbestimmten Frequenzbereich ($\pm \Delta$f);
   einen ersten spannungsgesteuerten Oszillator (22) zum Erzeugen von Mischsignalen (fc $\pm$ f) durch Durchlaufen des Oszillationssignales mit der Mittenfrequenz (fc) innerhalb des vorbestimmten Frequenzbereiches ($\pm \Delta$f) aufgrund des Kippsignales; und
   einen Frequenzwandler (23) zum Frequenzwandeln des Subtraktionssignales ($\Delta$), in dem

die Mischsignale (fc ± Δf) hiermit gemischt werden, wobei der Frequenzwandler (23) einen A/D-Wandler (234) umfaßt, um die digitalen Interferenzschwundsignale zu erhalten.

3. Einrichtung (100) nach Anspruch 2, dadurch gekennzeichnet, daß der Frequenzwandler (23) aus einem Mischer (231), einem Tiefpaßfilter (232), einer Abtast- und Halteschaltung (233) und dem Analog/Digital-Wandler (234) aufgebaut ist, wobei diese Schaltkreise in Reihe zueinander verbunden sind.

4. Einrichtung (100) nach Anspruch 1, dadurch gekennzeichnet, daß der Signalschwundkomponentenentferner (30) ein digitales Filter (300) umfaßt.

5. Einrichtung (100) nach Anspruch 4, dadurch gekennzeichnet, daß das digitale Filter (300) aufweist:

einen Speicher (310) zum Speichern der digitalen Interferenzschwundsignale, die von der Signalsucheinrichtung (20) abgeleitet sind; und

eine Digitalmittelwertschaltung (316; 318) zum aufeinanderfolgenden Addieren der digitalen Interferenzschwundsignale, die jeweils aus dem Speicher (310) ausgelesen sind, innerhalb einer vorbestimmten Datenzahladresse, um summierte Interferenzschwundsignalkomponentendaten abzuleiten, und zum Dividieren der summierten Interferenzschwundsignalkomponentendaten durch die vorbestimmte Datenzahladresse, um so digital gemittelte Interferenzschwundsignale abzuleiten, wodurch die schwundfreien digitalen Interferenzsignale erzeugt werden.

6. Einrichtung (100) nach Anspruch 5, dadurch gekennzeichnet, daß die Digitalmittelwertschaltung umfaßt:

einen digitalen Addierer (316) zum aufeinanderfolgenden Addieren der digitalen Interferenzschwundsignale, die jeweils aus dem Speicher (310) ausgelesen sind, innerhalb der vorbestimmten Datenzahladresse, um die summierten Interferenzschwundsignalkomponentendaten abzuleiten, und

ein erstes Verriegelungsglied (318) zum Verriegeln der summierten Interferenzschwundsignalkomponentendaten, um eine vorbestimmte Ziffer aus den summierten Interferenzschwundsignalkomponentendaten als die digital gemittelten Interferenzschwundsignale auszusieben.

7. Einrichtung (100) nach Anspruch 1, dadurch gekennzeichnet, daß die Höchstwertdetektoreinrichtung (40) umfaßt:

einen Puffer (404) zum Zwischenspeichern der digital gemittelten Interferenzschwundsignale, die aus der Signalschwundkomponenten-Entfernungseinrichtung (30) abgeleitet sind,

ein zweites Verriegelungsglied (406) zum Verriegeln der in dem Puffer (404) zwischengespeicherten Interferenzschwundsignale, und

einen Vergleicher (402) mit einem ersten Eingang (A) zum Entfernen der Interferenzschwundsignale von dem zweiten Verriegelungsglied (406) und einem zweiten Eingang (B) zum direkten Empfangen der Interferenzschwundsignale von der Signalschwundkomponentenentfernungseinrichtung (30), um die Interferenzschwundsignale des ersten Einganges (A) mit den Interferenzschwundsignalen des zweiten Einganges (B) zu vergleichen, um so das einzige digitale Datum mit dem Höchstwert abzuleiten.

8. Einrichtung (100) nach Anspruch 2, dadurch gekennzeichnet, daß die Frequenzsignalgeneratoreinrichtung (50) aufweist:

einen Frequenzspeicher (54) zum Speichern des einzigen digitalen Interferenzdatums mit dem Höchstwert, das von der Höchstwertdetektoreinrichtung (40) gesandt ist, und

einen zweiten spannungsgesteuerten Oszillator (52) zum Erzeugen des analogen Frequenzsignales durch entsprechendes Verarbeiten des einzigen digitalen Interferenzdatums, das in dem Frequenzspeicher (54) gespeichert ist, und des Schwingungssignales mit der Mittenfrequenz (fc), das vom Oszillator (21) abgeleitet ist.

9. Einrichtung (100) nach Anspruch 1, dadurch gekennzeichnet, daß die Verstärkungsfaktor- und Phasensteuereinrichtung aus einem Verstärker (16) mit veränderlichem Verstärkungsfaktor, einem variablen Phasenschieber (17), der in Reihe mit dem Verstärker (16) mit veränderlichem Verstärkungsfaktor verbunden ist, und einer Verstärkungsfaktor- und Phasensteuereinheit (18), die mit dem Verstärker (16) mit veränderlichem Verstärkungsfaktor und dem variablen Phasenschieber (17) gekoppelt ist, aufgebaut ist.

F I G. 1

A

TV SIGNAL OUTPUT

11

12

d

13

14

Σ

Δ

Δ

Δ'

15

16 VARIABLE GAIN AMPLIFIER

17 VARIABLE PHASE SHIFTER

18 GAIN/PHASE CONTROLLER

20 SIGNAL SEARCHER

30 FADING SIGNAL COMPONENT REMOVER

40 MAXIMUM VALUE DETECTOR

50 FREQUENCY SIGNAL GENERATOR

13

# F I G. 2

# F I G. 3A

# F I G. 3B

# F I G. 4

# F I G. 5

FIG. 6

FIG. 7

# F I G. 8

RAM 310

−Δfmax (8bits×32data)

+Δfmax

32data

310C
310B
310A

8bits

f(1 SWEEP)

256

EP 0 221 475 B1

18

# F I G.  9